# EUROPÄISCHE PATENTSCHRIFT

(11) **EP 2 700 557 B1**
(45) Veröffentlichungstag und Bekanntmachung des Hinweises auf die Patenterteilung: **16.12.2015**
(21) Anmeldenummer: 12005981.1
(22) Anmeldetag: 21.08.2012
(51) Int. Cl.: B61H 5/00, B60T 17/22, F16D 65/092

(54) **Vorrichtung und Verfahren zum Messen der Anpresskraft der Bremsbeläge an Bremsscheiben von Schienenfahrzeugen**
Device and method for measuring the pressing power of the brake linings on brake discs of rail vehicles
Dispositif et procédé de mesure de la force de pression des garnitures de frein sur les disques de frein de véhicules sur rails

(43) Veröffentlichungstag der Anmeldung: 26.02.2014
(73) Patentinhaber: RöschConsult International Ltd., 64354 Reinheim (DE)
(72) Erfinder: Rösch, Wolfgang, 64823 Gross-Umstadt (DE)
(74) Vertreter: Jany, Peter

(56) Entgegenhaltungen:
- WO-A1-2008/071578
- WO-A1-2009/077331
- DE-A1- 10 022 759

## Beschreibung

Die Erfindung betrifft eine Messvorrichtung zum Messen der Anpresskraft der Bremsbeläge von Bremszangeneinheiten an die Bremsscheiben scheibengebremster Schienenfahrzeuge, d.h. eine Vorrichtung, mit der die von einem Bremsbelag einer Bremszangeneinheit eines scheibengebremsten Radsatzes eines Schienenfahrzeuges auf die Bremsscheibe aufgebrachte Anpresskraft gemessen werden kann. Dies betrifft sowohl Bremszangeneinheiten an Scheibenbremsen mit Wellenbremsscheiben als auch an Scheibenbremsen mit Radbremsscheiben. Ferner richtet sich die Erfindung auf ein entsprechendes Verfahren zum Messen der Anpresskraft der Bremsbeläge von Bremszangeneinheiten an die Bremsscheiben scheibengebremster Schienenfahrzeuge.

Nach dem Stand der Technik wird die ordnungsgemäße Funktion der Bremszangeneinheit scheibengebremster Schienenfahrzeuge auf zwei Weisen geprüft. Zum einen wird während Instandhaltungs-, Kontroll- oder Wartungsarbeiten der Schienenfahrzeuge die Bremszangeneinheit in einem in das Schienenfahrzeug eingebauten Zustand nur indirekt anhand der Leichtgängigkeit der beweglichen Teile und einer augenscheinlichen Prüfung auf sichtbare Mängel geprüft. Eine messtechnische Kontrolle, ob die in der Bremsberechnung der Fahrzeugzulassungsdokumentation vorgeschriebene Anpresskraft der Bremsbeläge auf den Bremsscheiben beim Auslösen der Bremswirkung tatsächlich erreicht wird, erfolgt während betriebsnaher Instandhaltungs-, Kontroll- oder Wartungsarbeiten der Schienenfahrzeuge im eingebauten Zustand der Bremszangeneinheit nicht. Nach diesem Prinziparbeitetbeispielsweise die aus der Offenlegungsschrift DE 10022759 A1 bekannte Vorrichtung.

Zum anderen erfolgt eine messtechnische Kontrolle, ob die in der Bremsberechnung der Fahrzeugzulassungsdokumentation vorgeschriebene Anpresskraft der Bremsbeläge auf den Bremsscheiben beim Auslösen der Bremswirkung tatsächlich erreicht wird, während der Aufarbeitung der Bremszangen im aus dem Schienenfahrzeug ausgebauten Zustand auf einem speziellen Prüfstand beim Aufarbeiter. Dazu wird die Bremszangeneinheit unabhängig von ihrem tatsächlichen Verschleißzustand in einem regelmäßigen Zeitintervall aus dem Schienenfahrzeug ausgebaut und der Aufarbeitung zugeführt.

Die Prüfung der Funktion der Bremszangeneinheit scheibengebremster Schienenfahrzeuge nach dem Stand der Technik weist somit die Nachteile auf, dass im eingebauten Zustand der Bremszangeneinheit nur eine Sichtprüfung, aber keine messtechnische Funktionskontrolle erfolgt, und zum Durchführen einer messtechnischen Funktionskontrolle, die insbesondere eine Messung der Anpresskraft der Bremsbeläge von Bremszangeneinheiten an die Bremsscheiben umfasst, die Bremszangeneinheit aus dem Schienenfahrzeug ausgebaut und zur Überprüfung in einen speziellen Prüfstand eingebaut werden muss.

Ausgehend von diesem Stand der Technik liegt der vorliegenden Erfindung die Aufgabe zugrunde, eine Vorrichtung und ein entsprechendes Verfahren zu schaffen, mit der das Messen der Anpresskraft der Bremsbeläge auf den Bremsscheiben von Schienenfahrzeugen im eingebauten Zustand der Bremszangeneinheit mit wirksamer Bremse während betriebsnaher Instandhaltungs-, Kontroll- oder Wartungsarbeiten an den Schienenfahrzeugen ermöglicht wird, d.h. ohne dass die Bremszangeneinheit zum Prüfen der Anpresskraft aus dem Schienenfahrzeug ausgebaut werden muss.

Diese Aufgabe wird erfindungsgemäß durch eine Vorrichtung mit den Merkmalen des beigefügten Anspruchs 1 gelöst. Bevorzugte Ausgestaltungen, Weiterbildungen und Verwendungen der Erfindung ergeben sich aus den nebengeordneten und abhängigen Ansprüchen und der nachfolgenden Beschreibung mit zugehörigen Zeichnungen.

Eine erfindungsgemäße Vorrichtung zum Messen der von einem Bremsbelag einer Bremszangeneinheit eines scheibengebremsten Schienenfahrzeuges auf die Bremsscheibe aufgebrachten Anpresskraft umfasst also eine Trägerplatte, die anstelle des Bremsbelags am Bremsbelaghalter der Bremszangeneinheit befestigt werden kann, wobei die Bremszangeneinheit in das Schienenfahrzeug eingebaut ist, mindestens einen Kraftmesssensor, der derart in die Trägerplatte eingebracht ist, dass er bei wirksamer Bremse ein Messsignal erzeugt, das ein Maß für die Anpresskraft der Trägerplatte an der Bremsscheibe ist, ein Anschlusskabel zum Herausführen des Messsignals von dem Kraftmesssensor und eine Auswerteeinheit, der mittels des Anschlusskabels das Messsignal zugeführt wird und die zum Ermitteln der Größe der Anpresskraft an der Bremsscheibe aus dem Messsignal ausgebildet ist.

Ein entsprechendes erfindungsgemäßes Verfahren zum Messen der von einem Bremsbelag einer Bremszangeneinheit eines scheibengebremsten Schienenfahrzeuges auf die Bremsscheibe aufgebrachten Anpresskraft umfasst das Befestigen einer Trägerplatte anstelle des Bremsbelags am Bremsbelaghalter der Bremszangeneinheit, wobei die Bremszangeneinheit in das Schienenfahrzeug eingebaut ist, wobei die Trägerplatte mindestens einen Kraftmesssensor umfasst, der derart in die Trägerplatte eingebracht ist, dass er bei wirksamer Bremse ein Messsignal erzeugt, das ein Maß für die Anpresskraft der Trägerplatte an der Bremsscheibe ist, Herausführen des Messsignals von dem Kraftmesssensor mittels eines Anschlusskabels und Auslösen der Bremswirkung der Bremszangeneinheit und Ermitteln der Größe der Anpresskraft an der Bremsscheibe mittels einer Auswerteeinheit, der mittels des Anschlusskabels das Messsignal zugeführt wird.

Die Erfindung hat den Vorteil, dass sie das Messen der Anpresskraft der Bremsbeläge auf den Bremsscheiben von Schienenfahrzeugen im eingebauten Zustand der Bremszangeneinheit während betriebsnaher Instandhaltungs-, Kontroll- oder Wartungsarbeiten an den Schienenfahrzeugen ermöglicht und somit der Ausbau und die Aufarbeitung der Bremszangeneinheit näher an die tatsächliche Verschleißgrenze gelegt werden kann.

Das geltende Regelwerk der Schienenfahrzeuginstandhaltung und der bekannte Stand der Technik sehen eine Messung der Anpresskraft der Bremsbeläge auf den Bremsscheiben bei Instandhaltungs-, Kontroll- oder Wartungsarbeiten der Schienenfahrzeuge im eingebauten Zustand der Bremszangeneinheit nicht vor. Das geltende Regelwerk legt also nicht nahe, nach einer Lösung, wie sie die Erfindung beinhaltet, zu suchen. Insofern ist es nicht naheliegend, ausgehend von dem Stand der Technik der Schienenfahrzeuginstandhaltung zu der Erfindung zu gelangen.

Der Erfindung liegt die Erkenntnis zugrunde, dass der Ausbau und die Aufarbeitung der Bremszangeneinheiten nicht in einem festen, vorsorglichen Intervall stattfinden müssen, sondern nach dem tatsächlichen Erreichen von definierten Verschleißgrenzen vorgenommen werden können. Als wesentliches Kontrollkriterium ist dabei zu prüfen, ob die in der Bremsberechnung der Fahrzeugzulassungsdokumentation vorgeschriebenen Anpresskraft der Bremsbeläge auf den Bremsscheiben zuverlässig erreicht wird. Da alle Verschleiß-, Alterungs- und Ausfallerscheinungen der einzelnen Bauteile der Bremszangeneinheit letztlich ein Absinken oder vollständiges Ausbleiben der Anpresskraft der Bremsbeläge auf den Bremsscheiben und damit eine Reduktion oder einen Ausfall der Bremswirkung zur Folge haben, ist über die direkte Messung der Anpresskraft ein Rückschluss darauf möglich, dass zum Zeitpunkt der Messung keine unzulässigen Verschleiß-, Alterungs- oder Ausfallzustände herrschen.

Mit der Erfindung kann die Wirksamkeit der Bremszangeneinheit ohne Ausbau derselben während einer Instandhaltungs-, Kontroll- oder Wartungsmaßnahme unmittelbar durch Messung ihrer Bremskraft an der Bremsscheibe überprüft werden und alle Verschleiß-, Alterungs- und Ausfallerscheinungen, die zu einer Verminderung der Bremskraft an der Bremsscheibe führen, können dadurch erkannt werden. Eine regelmäßige Messung im Rahmen der Instandhaltung, Kontrolle oder Wartung bringt Erkenntnisse über die Verschleiß-, Alterungs- und Ausfallverläufe der Bremszangeneinheiten. Dadurch wird die Erfindung vorteilhafterweise eine deutliche Intervallverlängerung der Aufarbeitung der Bremszangeneinheiten ermöglichen, die ohne einen Verlust an Sicherheit erhebliche Kosten einspart.

Eine Trägerplatte kann ein oder mehrere Kraftmesssensoren aufweisen, mit denen die Anpresskraft der Bremszangeneinheit auf die Bremsscheibe bei wirksamer Bremse gemessen werden kann. Die Kraftmesssensoren sind vorzugsweise in die Trägerplatte eingelassen, können aber auch auf andere Weise an der Trägerplatte befestigt sein. Die Kraftsensoren sind vorteilhafterweise bezüglich ihres Messbereichs für die Messung der gemäß Bremsberechnung des jeweiligen Schienenfahrzeugs zu erwartenden Kräfte ausgelegt. Kraftmesssensoren im Sinne der Erfindung sind auch Druckmesssensoren, da bei bekannter Größe der Aufstands- oder Druckfläche eines Druckmesssensors der gemessene Anpressdruck ebenfalls ein Maß für die Anpresskraft ist.

Die Erfindung wird nachfolgend anhand eines in den Figuren dargestellten Ausführungsbeispiels näher erläutert. Die darin beschriebenen Besonderheiten können einzeln oder in Kombination miteinander eingesetzt werden, um bevorzugte Ausgestaltungen der Erfindung zu schaffen. Gleiche oder gleich wirkende Teile werden in den verschiedenen Figuren mit denselben Bezugszeichen bezeichnet und gewöhnlich nur einmal beschrieben, auch wenn sie bei anderen Ausführungsformen vorteilhaft eingesetzt werden können. Es zeigt:

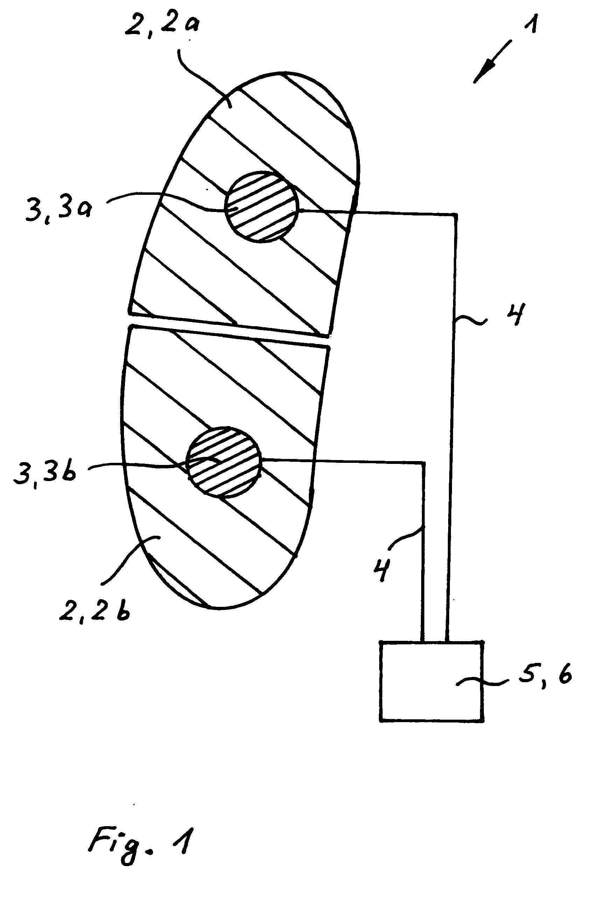

- Figur 1: eine schematische Ansicht einer erfindungsgemäßen Vorrichtung.

Die Figur 1 zeigt eine schematische Ansicht einer erfindungsgemäßen Vorrichtung 1 zum Messen der von einem Bremsbelag einer Bremszangeneinheit eines scheibengebremsten Schienenfahrzeuges auf die Bremsscheibe aufgebrachten Anpresskraft in Aufsicht auf die Seite der Trägerplatte 2, die an einer nicht dargestellten Bremsscheibe anliegt. Die Vorrichtung 1 umfasst eine Trägerplatte 2, beispielsweise aus Stahl, die anstelle des Bremsbelags am Bremsbelaghalter der Bremszangeneinheit befestigt werden kann, wobei die Bremszangeneinheit in das Schienenfahrzeug eingebaut ist.

Die Vorrichtung 1 umfasst ferner mindestens einen Kraftmesssensor 3, der derart in die Trägerplatte 2 eingebracht ist, dass er bei wirksamer Bremse ein Messsignal erzeugt, das ein Maß für die Anpresskraft der Trägerplatte 2 an der Bremsscheibe ist, ein Anschlusskabel 4 zum Herausführen des Messsignals von dem Kraftmesssensor 3 und eine Auswerteeinheit 5, der mittels des Anschlusskabels 4 das Messsignal zugeführt wird und die zum Ermitteln der Größe der Anpresskraft an der Bremsscheibe ausgebildet ist.

Die Trägerplatte 2 besteht beispielsweise aus Stahl. Nach einem bevorzugten Merkmal entspricht die Trägerplatte 2 in ihrer Form und Kontur und in der Ausbildung der Befestigungselemente, mit denen sie an dem Bremsbelaghalter der zugehörigen, zu prüfenden Bremszangeneinheit befestigt werden kann, dem Bremsbelag, anstelle dessen sie am Bremsbelaghalter befestigt werden kann. Vorzugsweise sind Form und Kontur der Trägerplatte 2 und die Ausbildung der Befestigungselemente identisch zu dem dem Bremsbelag, anstelle dessen sie am Bremsbelaghalter befestigt werden kann. Damit die Trägerplatte 2 eine Außenkontur und die Befestigungspunkte der für die jeweilige Bauart der Bremszangeneinheit passenden Bremsbeläge aufweist, ist es vorteilhaft, wenn die erfindungsgemäße Vorrichtung 1 ein System oder eine Reihe von Trägerplatten 2 umfasst, in dem es für jede Bremsbauart eine an die Form der zugehörigen Bremsbeläge angepasste Trägerplatte 2 gibt, die in ihrer Kontur und Befestigungsmöglichkeit am Bremsbelaghalter zu dem jeweils nach Bremsentyp zu verwendenden Bremsbelag ähnlich oder identisch ist und deshalb anstelle des Bremsbelags am Bremsbelaghalter befestigt werden kann.

In der Regel ähnelt die Kontur eines Bremsbelags einer flachen Scheibe gleichmäßiger Dicke, die die Form einer entlang des großen Durchmessers gebogenen, flachen Ellipse hat. Die in Figur 1 dargestellte Trägerplatte 2 hat ebenfalls diese Form, ist aber am kleinen Durchmesser der gebogenen Ellipse in zwei etwa gleichgroße Teile 2a, 2b zweigeteilt. Dies entspricht der Bauart mancher zweigeteilter Bremsbeläge. Im Bremsbelaghalter werden zwei dieser Beläge mit den geraden Enden zueinander befestigt, sodass aus diesen zwei Einzelbelägen ein Gesamtbelag in Form einer flachen, entlang des großen Durchmessers gebogenen Ellipse entsteht. Entsprechendes gilt für die Teile 2a, 2b der Trägerplatte 2. Alternativ kann die Kontur der Bremsbeläge auch nur aus einem Belagteil in der Form des beschriebenen Gesamtbelags bestehen, also auch die Trägerplatte 2. Allgemein kann die Trägerplatte 2 mehrteilig ausgebildet sein, wobei einer oder mehrere Teile der Trägerplatte 2 keinen, einen oder mehrere Kraftmesssensoren 3 aufweisen können.

Für unterschiedliche Bauarten von Schienenfahrzeugen und Bremszangeneinheiten sind also unterschiedliche Trägerplatten 2 zu verwenden, die in ihrer Form und den Befestigungsmöglichkeiten am Bremsbelaghalter den jeweils passenden Belägen entsprechen. Allen Trägerplatten 2 ist in der Regel gemeinsam, dass der Raum, der erforderlich ist, um einen oder mehrere für die Größe der Anpresskraft geeignete Kraftmesssensoren 3 aufzunehmen, aus dem Material der Trägerplatte 2 ausgearbeitet, zum Beispiel ausgefräst ist. Alternativ können die Messschichten der Kraftmesssensoren auch flächig auf der Trägerplatte 2 ausgebildet sein. In diesem Raum sitzen die Kraftmesssensoren 3, die mit der Trägerplatte 2 form-, stoff- oder kraftschlüssig verbunden sind. Bei dem Ausführungsbeispiel in Figur 2 sind zwei Kraftmesssensoren 3a, 3b vorgesehen, und zwar jeweils einer in einem Teil 2a, 2b der Trägerplatte 2.

Aus den Kraftmesssensoren 3 ist ein Anschlusskabel 4 herausgeführt, das das Messsignal zur Auswerteeinheit 5 leitet. Der Raum für die Sensoren in der Trägerplatte 2, die Kraftmesssensoren 3 und das Kabel 4 sind vorzugsweise so in der Trägerplatte 2 angeordnet, dass die Funktion der Bremszangeneinheit dabei nicht beeinträchtigt wird. Allgemein ist es vorteilhaft, wenn die Aussparungen in der Trägerplatte 2 für die Kraftmesssensoren 3, die Kraftmesssensoren 3, das Anschlusskabel 4 und die Auswerteeinheit 5 derart in einem freien Bauraum, einschließlich des Raumes des durch sie ersetzten Bremsbelags, angeordnet sind, dass die Funktion der Bremszangeneinheit nicht behindert wird.

Die Vorrichtung 1 umfasst also eine Trägerplatte 2, die in Kontur und Befestigungsmöglichkeit mit dem Bremsbelag identisch oder zu diesem ähnlich ist und die deshalb anstelle eines Bremsbelages am Bremsbelaghalter befestigt werden kann. Da Bremsbeläge im Rahmen der Instandhaltungs-, Kontroll- oder Wartungsarbeiten der Schienenfahrzeuge nach Verschleiß regelmäßig im eingebauten Zustand der Bremszangeneinheit gegen neue Beläge getauscht werden, ist der Tausch eines Bremsbelags gegen die Trägerplatte 2 der Vorrichtung 1 im eingebauten Zustand der Bremszangeneinheit leicht möglich. Die Trägerplatte 2 enthält eine oder mehrere Aussparungen, in denen ein oder mehrere handelsübliche Kraftmesssensoren 3 untergebracht sind, die für die Aufnahme der zu messenden Anpresskräfte geeignet sind. Über das an den Kraftmesssensoren 3 angebrachte und nach außen geführte Kabel 4 wird der Messwert der Anpresskraft einer ebenfalls handelsüblichen Auswerteeinheit 5, die nach einem weiteren vorteilhaften Merkmal als Ablese-, Auswerte- und Speichereinheit ausgebildet ist, zugeführt. Der Kern der Erfindung besteht in der Gestaltung der Trägerplatte 2 als Bremsbelag-Dummy mit eingebauter und angeschlossener Kraftmesstechnik. Die Kraftmesssensoren 3 und die Ablese-, Auswerte- und Speichereinheit 6 selbst sind nicht Gegenstand der Erfindung, sondern handelsübliche gebräuchliche Teile, die hier nur in einem neuen Kontext verwendet werden.

Bei einem erfindungsgemäßen Verfahren zum Messen der von einem Bremsbelag einer Bremszangeneinheit eines scheibengebremsten Schienenfahrzeuges auf die Bremsscheibe aufgebrachten Anpresskraft wird eine Trägerplatte 2 anstelle des Bremsbelags am Bremsbelaghalter der Bremszangeneinheit befestigt, wobei die Bremszangeneinheit in das Schienenfahrzeug eingebaut ist, wobei die Trägerplatte 2 mindestens einen Kraftmesssensor 3 umfasst, der derart in die Trägerplatte 2 eingebracht ist, dass er bei wirksamer Bremse ein Messsignal erzeugt, das ein Maß für die Anpresskraft der Trägerplatte 2 an der Bremsscheibe ist, das Messsignal von dem Kraftmesssensor 3 wird mittels eines Anschlusskabels 4 herausgeführt und die Bremswirkung der Bremszangeneinheit wird ausgelöst, wobei die Größe der Anpresskraft an der Bremsscheibe mittels einer Auswerteeinheit 5, der mittels des Anschlusskabels 4 das Messsignal zugeführt wird, ermittelt wird.

Vor Beginn der Messung wird also ein Bremsbelag (bei geteilten Belägen beide Halbbeläge) bei in das Schienenfahrzeug eingebautem Zustand der Bremszangeneinheit aus dem Bremsbelaghalter entfernt und dafür die Trägerplatte 2 mit den Kraftmesssensoren 3 und dem Anschlusskabel 4 am Bremsbelaghalter der Bremszangeneinheit angebracht. An das Kabel 4 der Kraftmesssensoren 3 wird die Auswerteeinheit 5 angeschlossen. Wenn die Vorrichtung 1 bereit zum Messen ist, wird die Bremse des Schienenfahrzeugs angelegt und dadurch die Vorrichtung 1 bzw. die anstelle des Bremsbelags in die Bremszangeneinheit eingesetzte Trägerplatte 2 an die Bremsscheibe angepresst. Hierbei sind natürlich Anforderungen zur Arbeitssicherheit (Quetschgefahr beim Wirksamwerden der Bremse, d.h. beim Auslösen der Bremse und bei arbeitender Bremszangeneinheit) zu beachten.

Nachdem der Ist-Messwert der Anpresskraft in der Auswerteeinheit 5 bzw. Ablese-, Auswerte- und Speichereinheit 6 registriert ist, wird die Bremse wieder gelöst. Diese Abfolge wird für alle Bremsstellungen und Bremsarten wiederholt. Allgemein kann es vorteilhaft sein, wenn für mehrere Bremsstellungen und Bremsarten das Auslösen der Bremswirkung der Bremszangeneinheit und das Ermitteln der Größe der Anpresskraft an der Bremsscheibe wiederholt werden. In einem Auswerteschritt können dann die Messwerte der Anpresskraft mit Soll-Werten der Anpresskraft verglichen werden. Die Soll-Werte stammen beispielsweise aus der Bremsberechnung des Schienenfahrzeugs, können aber auch auf Erfahrungswerten beruhen. Liegen die Ist-Werte innerhalb eines von der für die Instandhaltung verantwortlichen Stelle des Schienenfahrzeugs zu definierenden Toleranzbereichs um den Soll-Wert, kann die Bremszangeneinheit bis zur nächsten Messung weiter betrieben werden, muss also nicht ausgebaut werden. Liegen sie außerhalb des Toleranzbereichs, ist die Bremszangeneinheit zu tauschen und aufzuarbeiten. Das Messintervall ist ebenfalls durch die für die Instandhaltung verantwortliche Stelle des Schienenfahrzeugs auf der Grundlage einer Risikoanalyse festzulegen.

### Bezugszeichenliste

- 1: Vorrichtung
- 2: Trägerplatte
- 2a: Teil einer Trägerplatte
- 2b: Teil einer Trägerplatte
- 3: Kraftmesssensor
- 3a: erster Kraftmesssensor
- 3b: zweiter Kraftmesssensor
- 4: Anschlusskabel
- 5: Auswerteeinheit
- 6: Ablese-, Auswerte- und Speichereinheit

## Patentansprüche

1. Vorrichtung (1) zum Messen der von einem Bremsbelag einer Bremszangeneinheit eines scheibengebremsten Schienenfahrzeuges auf die Bremsscheibe aufgebrachten Anpresskraft, **dadurch gekennzeichnet, dass** sie folgendes umfasst:
eine Trägerplatte (2), die anstelle des Bremsbelags am Bremsbelaghalter der Bremszangeneinheit befestigt werden kann, wobei die Bremszangeneinheit in das Schienenfahrzeug eingebaut ist,
mindestens einen Kraftmesssensor (3), der derart in die Trägerplatte (2) eingebracht ist, dass er bei wirksamer Bremse ein Messsignal erzeugt, das ein Maß für die Anpresskraft der Trägerplatte (2) an der Bremsscheibe ist,
ein Anschlusskabel (4) zum Herausführen des Messsignals von dem Kraftmesssensor (3) und
eine Auswerteeinheit (5), der mittels des Anschlusskabels (4) das Messsignal zugeführt wird und die zum Ermitteln der Größe der Anpresskraft an der Bremsscheibe aus dem Messsignal ausgebildet ist.

2. Vorrichtung (1) nach Anspruch 1, **dadurch gekennzeichnet, dass** die Trägerplatte (2) in ihrer Form und Kontur und in der Ausbildung der Befestigungselemente, mit denen sie an dem Bremsbelaghalter der zugehörigen, zu prüfenden Bremszangeneinheit befestigt werden kann, dem Bremsbelag entspricht, anstelle dessen sie am Bremsbelaghalter befestigt werden kann.

3. Vorrichtung (1) nach einem der vorhergehenden Ansprüche, **dadurch gekennzeichnet, dass** die Trägerplatte (2) mehrteilig ist.

4. Vorrichtung (1) nach dem vorhergehenden Anspruch, **dadurch gekennzeichnet, dass** die Trägerplatte (2) in zwei etwa gleichgroße Teile (2a, 2b) zweigeteilt ist.

5. Vorrichtung (1) nach einem der vorhergehenden Ansprüche, **dadurch gekennzeichnet, dass** die Kontur der Trägerplatte (2) einer Kontur eines Bremsbelags ähnelt, der die Kontur einer flachen Scheibe gleichmäßiger Dicke, entlang des großen Durchmessers gebogenen, flachen Ellipse hat.

6. Vorrichtung (1) nach einem der vorhergehenden Ansprüche, **dadurch gekennzeichnet, dass** die Trägerplatte (2) mehrere Kraftmesssensoren (3a, 3b) aufweist, mit denen die Anpresskraft der Bremszangeneinheit auf die Bremsscheibe bei wirksamer Bremse gemessen werden kann.

7. Vorrichtung (1) nach einem der vorhergehenden Ansprüche, **dadurch gekennzeichnet, dass** die Auswerteeinheit (5) als Ablese-, Auswerte- und Speichereinheit (6) ausgebildet ist.

8. Vorrichtung (1) nach einem der vorhergehenden Ansprüche, **dadurch gekennzeichnet, dass** die Aussparungen in der Trägerplatte (2) für die Kraftmesssensoren (3), die Kraftmesssensoren (3), das Anschlusskabel (4) und die Auswerteeinheit (5) derart in einem freien Bauraum, einschließlich des Raumes des durch sie ersetzten Bremsbelags, angeordnet sind, dass die Funktion der Bremszangeneinheit nicht behindert wird.

9. Verfahren zum Messen der von einem Bremsbelag einer Bremszangeneinheit eines scheibengebremsten Schienenfahrzeuges auf die Bremsscheibe aufgebrachten Anpresskraft, umfassend Befestigen einer Trägerplatte (2) anstelle des Bremsbelags am Bremsbelaghalter der Bremszangeneinheit, wobei die Bremszangeneinheit in das Schienenfahrzeug eingebaut ist,
wobei die Trägerplatte (2) mindestens einen Kraftmesssensor (3) umfasst, der derart in die Trägerplatte (2) eingebracht ist, dass er bei wirksamer Bremse ein Messsignal erzeugt, das ein Maß für die Anpresskraft der Trägerplatte (2) an der Bremsscheibe ist,
Herausführen des Messsignals von dem Kraftmesssensor (3) mittels eines Anschlusskabels (4) und
Auslösen der Bremswirkung der Bremszangeneinheit und Ermitteln der Größe der Anpresskraft an der Bremsscheibe mittels einer Auswerteeinheit (5), der mittels des Anschlusskabels (4) das Messsignal zugeführt wird.

10. Verfahren nach Anspruch 9, **dadurch gekennzeichnet, dass** für mehrere Bremsstellungen und Bremsarten das Auslösen der Bremswirkung der Bremszangeneinheit und das Ermitteln der Größe der Anpresskraft an der Bremsscheibe wiederholt werden.

11. Verfahren nach Anspruch 9 oder 10, **dadurch gekennzeichnet, dass** in einem Auswerteschritt der Messwert der Anpresskraft mit einem Soll-Wert der Anpresskraft verglichen wird.

## Claims

1. Device (1) for measuring the pressing force of a brake lining of a brake calliper unit of a disc-braked rail vehicle applied on the brake disc, **characterized in that** it comprises:
- a carrier plate (2) that can be fixed to the brake lining holder of the brake calliper unit in place of the brake lining, wherein the brake calliper unit is installed into the rail vehicle,
- at least one force measuring sensor (3) which is fitted into the carrier plate (2) such that it generates a measuring signal when the brake is applied, which signal is a measure for the pressing force of the carrier plate (2) on the brake disc,
- a connector cable (4) for leading the measuring signal out of the force measuring sensor (3) and
- an evaluation unit (5) which is fed with the measuring signal via the connector cable (4) and which is configured for determining the size of the pressing force on the brake disc from the measuring signal.

2. Device (1) according to claim 1, **characterized in that** the carrier plate (2) in its shape and contour and with respect to the configuration of its fixing elements, by means of which said plate can be fixed to the brake lining holder of the associated brake calliper unit to be measured, corresponds to the brake lining in place of which said plate can be fixed to the brake lining holder.

3. Device (1) according to one of the preceding claims, **characterized in that** the carrier plate (2) is a multipart plate.

4. Device (1) according to the preceding claim, **characterized in that** the carrier plate (2) is divided into two parts (2a, 2b) approximately equal in size.

5. Device (1) according to one of the preceding claims, **characterized in that** the contour of the carrier plate (2) is similar to a contour of a brake lining having the contour of a flat disc with even thickness bend along the large diameter of a flat ellipse.

6. Device (1) according to one of the preceding claims, **characterized in that** the carrier plate (2) comprises multiple force measuring sensors (3a, 3b) by means of which can be measured the pressing force of the brake calliper unit on the brake disc when the brake is applied.

7. Device (1) according to one of the preceding claims, **characterized in that** the evaluation unit (5) is configured as a read-out, evaluation and storage unit (6).

8. Device (1) according to one of the preceding claims, **characterized in that** the recesses in the carrier plate (2) for the force measuring sensors (3), the force measuring sensors (3), the connector cable (4) and the evaluation unit (5) are arranged in a free installation space, including the space of the brake lining replaced by them, such that the function of the brake calliper unit is not obstructed.

9. Method for measuring the pressing force of a brake lining of a brake calliper unit of a disk-braked rail vehicle applied on the brake disc, comprising
- fixing a carrier plate (2) to the brake lining holder of the brake calliper unit in place of the brake lining, wherein the brake calliper unit is installed in the railroad vehicle,
wherein the carrier plate (2) comprises at least one force measuring sensor (3) which is fitted into the carrier plate (2) such that it generates a measuring signal when the brake is applied, which signal is a measure for the pressing force of the carrier plate (2) on the brake disc,
- leading the measuring signal out from the force measuring sensor (3) via a connector cable (4) and
- initiating the braking effect of the brake calliper unit and determining the size of the pressing force on the brake disc by means of an evaluation unit (5) which is fed with the measuring signal via the connector cable (4).

10. Method according to claim 9, **characterized in that** initiating the braking effect of the brake calliper unit and determining the size of the pressing force on the brake disc is repeated for multiple braking positions and braking types.

11. Method according to claim 9 or 10, **characterized in that** in an evaluation step, the measured value of the pressing force is compared to a set value of the pressing force.

## Revendications

1. Dispositif (1) pour mesurer la force de pression exercée sur le disque de frein par une garniture de frein d'un ensemble étrier de frein d'un véhicule sur rails freiné par des freins à disque, **caractérisé en ce qu'**il comprend :
une plaque support (2) qui peut être fixée à la place de la garniture de frein sur le support de garniture de frein de l'ensemble étrier de frein, l'ensemble étrier de frein étant monté dans le véhicule sur rails,
au moins un capteur de mesure de force (3) qui est mis en place dans la plaque support (2) de telle façon qu'il génère un signal de mesure lorsque le frein est actif, lequel signal est une mesure de la force de pression de la plaque support (2) sur le disque de frein,
un câble de connexion (4) pour faire sortir le signal de mesure du capteur de mesure de force (3) et
une unité d'évaluation (5) à laquelle le signal de mesure est amené au moyen du câble de connexion (4) et qui est conçue pour déterminer la grandeur de la force de pression sur le disque de frein à partir du signal de mesure.

2. Dispositif (1) selon la revendication 1, **caractérisé en ce que** la plaque support (2) correspond dans sa forme et son contour, ainsi que dans la configuration des éléments de fixation avec lesquels elle peut être fixée au support de garniture de frein de l'ensemble étrier de frein à contrôler associé, à la garniture de frein à la place de laquelle elle peut être fixée au support de garniture de frein.

3. Dispositif (1) selon l'une des revendications précédentes, **caractérisé en ce que** la plaque support (2) est en plusieurs parties.

4. Dispositif (1) selon la revendication précédente, **caractérisé en ce que** la plaque support (2) est divisée en deux parties (2a, 2b) sensiblement de même taille.

5. Dispositif (1) selon l'une des revendications précédentes, **caractérisé en ce que** le contour de la plaque support (2) s'apparente au contour d'une garniture de frein qui a le contour d'un disque plat d'épaisseur uniforme en forme d'ellipse plate pliée le long du grand diamètre.

6. Dispositif (1) selon l'une des revendications précédentes, **caractérisé en ce que** la plaque support (2) présente plusieurs capteurs de mesure de force (3a, 3b) qui permettent de mesurer la force de pression de l'ensemble étrier de frein sur le disque de frein lorsque le frein est actif.

7. Dispositif (1) selon l'une des revendications précédentes, **caractérisé en ce que** l'unité d'évaluation (5) est réalisée sous la forme d'une unité de lecture, d'évaluation et de stockage (6).

8. Dispositif (1) selon l'une des revendications précédentes, **caractérisé en ce que** les évidements dans la plaque support (2) pour les capteurs de mesure de force (3), les capteurs de mesure de force (3), le câble de connexion (4) et l'unité d'évaluation (5) sont disposés dans un espace de montage libre, incluant l'espace de la garniture de frein qu'ils remplacent, de telle façon qu'ils n'empêchent pas le fonctionnement de l'ensemble étrier de frein.

9. Procédé pour mesurer la force de pression exercée sur le disque de frein par une garniture de frein d'un ensemble étrier de frein d'un véhicule sur rails freiné par des freins à disque, consistant à :
fixer une plaque support (2) à la place de la garniture de frein sur le support de garniture de frein de l'ensemble étrier de frein, l'ensemble étrier de frein étant monté dans le véhicule sur rails,
la plaque support (2) comprenant au moins un capteur de mesure de force (3) qui est mis en place dans la plaque support (2) de telle façon qu'il génère un signal de mesure lorsque le frein est actif, lequel signal est une mesure de la force de pression de la plaque support (2) sur le disque de frein,
faire sortir le signal de mesure du capteur de mesure de force (3) au moyen d'un câble de connexion (4) et
déclencher l'effet de freinage de l'ensemble étrier de frein et déterminer la grandeur de la force de pression sur le disque de frein au moyen d'une unité d'évaluation (5) à laquelle le signal de mesure est amené au moyen du câble de connexion (4).

10. Procédé selon la revendication 9, **caractérisé en ce que** le déclenchement de l'effet de freinage de l'ensemble étrier de frein et la détermination de la grandeur de la force de pression sur le disque de frein sont répétés pour plusieurs positions de freinage et types de freinage.

11. Procédé selon la revendication 9 ou 10, **caractérisé en ce que**, dans une étape d'évaluation, la valeur de mesure de la force de pression est comparée avec une valeur de consigne de la force de pression.
